# EUROPÄISCHE PATENTANMELDUNG

(11) **EP 2 284 453 A2**
(43) Veröffentlichungstag der Anmeldung: **16.02.2011**
(21) Anmeldenummer: 10172260.1
(22) Anmeldetag: 09.08.2010
(51) Int. Cl.: F24J 2/24, F24J 2/46

(54) **Absorber zum Erwärmen eines Fluids**

(30) Priorität: 13.08.2009 DE 102009037064
(71) Anmelder: Roos Freizeitanlagen GmbH, 63674 Altenstadt (DE)
(72) Erfinder: Roos, Franz, 63674, Altenstadt (DE)
(74) Vertreter: Staudt, Armin Walter

(57) **Zusammenfassung**

Bei einem bekannten Absorber zum Erwärmen einer Fluids ist mindestens ein Verteilerrohr (1,50,63,64,73) zur Zu- oder Ableitung des zu erwärmenden Fluids vorgesehen, das eine Längsachse (11,62) und eine Verteilerrohr-Wandung (7,51) aufweist, über deren Länge Rohranschlüsse (2,41,42,43,54,71) zum Anschluss von Kollektorrohren (58,66,91) verteilt sind. Um hiervon ausgehend einen Absorber bereit zu stellen, der sich durch einfache und sichere Montierbarkeit, Frostbeständigkeit, Ermüdungsfestigkeit und hohe Effizienz auszeichnet und der außerdem die Anforderungen an eine ästhetische Anmutung erfüllt, wird erfindungsgemäß vorgeschlagen, dass mindestens ein Teil der Rohranschlüsse (2,41,42,43,54,71) einen mit der Wandung (7,51) des Verteilerrohres (1,50,63,64,73) verbundenen Sockel (4,55) aufweist, der in zwei oder mehr Rohranschlussstutzen (8,9,44,45) zum Anschluss der Kollektorrohre (58,66,91) verzweigt.

## Beschreibung

Die vorliegende Erfindung betrifft einen Absorber zum Erwärmen eines Fluids, umfassend mindestens ein Verteilerrohr zur Zu- oder Ableitung des zu erwärmenden Fluids, das eine Längsachse und eine Verteilerrohr-Wandung aufweist, über deren Länge Rohranschlüsse zum Anschluss von Kollektorrohren verteilt sind.

### Stand der Technik

Der Absorber wird grundsätzlich von dem zu erwärmenden Fluid durchströmt, wobei der Fluidstrom Wärme aus dem Absorber aufnimmt und als erwärmtes Gas oder als erwärmte Flüssigkeit daraus wieder abgeführt wird.

Derartige Absorber werden beispielsweise in Form von Solarkollektoren in unterschiedlichen Ausführungsformen zur Erwärmung des Wassers von Schwimmbädern, fest installierter oder frei aufstellbarer Schwimmbecken, Kinderpools im Innen- oder Außenbereich, Gartenduschen und dergleichen eingesetzt, sowie im Zuge der Energieeinsparung und Nutzung erneuerbarer Energien zunehmend auch zur Wärmeerzeugung oder -rückgewinnung im Bereich der Brauchwassererwärmung und Wohnraumbeheizung in Verbindung mit Wärmespeichern. Als Wärmeübertragungsmedium kommt im zuerst genannten Anwendungsbereich ausschließlich Wasser in Betracht. Bei der Wärmeerzeugung oder Wärmerückgewinnung werden jedoch auch andere Flüssigkeiten oder Gase eingesetzt und auch andere Absorbertypen, wie beispielsweise im Bereich der Geothermie in die Erde eingebettete Erdwärmeabsorber oder Absorberkanalmatten zur Wärmerückgewinnung aus Abwasser wie etwa in der DE 20 2004 018 084 U1 beschrieben.

Ein Absorber zum Einsatz als Solarkollektor zur Beheizung von Schwimmbadwasser ist in der DE 10 2005 061 008 B3 beschrieben. Der Solarkollektor besteht aus einer mattenförmigen Anordnung, die aus zahlreichen, parallel zueinander verlaufender Kollektorrohren gebildet wird. Die Kollektorrohre sind als Wellrohre ausgebildet und erstrecken sich zwischen einem gemeinsamen Verteilerrohr und einem gemeinsamen Sammelrohr. Über das Verteilerrohr wird das zu erwärmende Wasser den Kollektorrohren zugeführt und aus dem Sammelrohr wieder abgeleitet. Der Einfachheit halber werden Verteilerrohr und Sammelrohr im Folgenden auch unter dem Begriff "Verteilerrohr" zusammengefasst.

Verteilerrohre haben einen deutlich größeren Innendurchmesser als die Kollektorrohre. Außerdem tragen Verteilerrohre wegen ihrer Eigenschaft als seitliche Begrenzung der Absorbermatte zur Formstabilisierung derselben bei und weisen in der Regel eine gewisse Biegesteifheit auf. Diese erleichtert zudem die Herstellung wasserdichter Verbindungen zu den Flüssigkeitszu- und - ableitungen, erschwert jedoch den Transport der Verteilerrohre, da diese nicht aufrollbar sind. Daher werden die Verteilerrohre in der Regel aus kürzeren Einzelstücken zusammengesetzt, beispielsweise durch Verkleben. Sämtliche Rohre des bekannten Absorbers bestehen aus Kunststoff. Ein besonderes Augenmerk liegt auf der Frostbeständigkeit der bekannten Absorber.

Eine andere Art von Solarabsorbern wird zur Wärmeerzeugung oder - rückgewinnung im Bereich der Brauchwassererwärmung und Wohnraumbeheizung eingesetzt. Dabei werden hohe Temperaturen in der Regel über 60 °C angestrebt, was durch eine diskontinuierliche Betriebsweise des Absorbers erreicht wird, indem Wasser oder ein anderer Wärmeträger innerhalb des Absorbers verbleibt und darin solange erhitzt wird, bis es eine vorgegebene Solltemperatur erreicht hat. Ein derartiger Solarabsorber ist aus der DE 100 39 111 B4 bekannt. Er besteht aus Metall und setzt sich aus sogenannten Streifenabsorbern zusammen, die aus Kapillarrohren aus Kupfer bestehen, die mit einem Sammelrohr aus Edelstahl durch Löten verbunden sind. Zwecks Verbesserung der Frostbeständigkeit des Absorbers wird vorgeschlagen, das Sammelrohr mit Wellrohr-Profil auszubilden.

Das Einlöten der Kapillarrohre beim Lötprozess birgt das Risiko, dass die als Wellrohr ausgebildete und daher dünne Wandung des Sammelrohres beeinträchtigt oder sogar beschädigt wird. Die thermische Beaufschlagung beim Aufbringen des flüssigen Lötmaterials kann den Verlauf von Kraftlinien ungünstig verändern und erhöhte mechanische Spannungen im Bereich der Lötstelle verursachen. Andauernde Verformungen tagen führen zur Ermüdung des Materials und schließlich zu Bruch oder Riss im Bereich der Lötverbindung. Davon abgesehen ist die Montage ist relativ aufwändig.

Die Verbindung von Verteilerrohr-Teilstücken miteinander oder mit Zu- und Ablaufrohren oder anderen Anschlusselementen aus Kunststoff erfolgt üblicherweise durch Kleben oder Schweißen. Starre Verteilerrohre aus Kunststoff haben eine glatte Außenwandung, so dass an den Enden des Verteilerrohres oder an Zwischenstücken flüssigkeitsdichte Anschlüsse in Form von Rohrmuffen angebracht werden können, wobei die glatte Zylindermantelfläche als Dichtfläche dienen kann.

Im Sinne einer optimalen Wärmeausbeute ist es erwünscht, wenn die Kollektorrohre möglichst dicht beieinander liegen, so dass eine weitgehend geschlossene Absorberfläche bereitgestellt wird. Andererseits verbleibt bei einer engen Anordnung der Kollektorrohre zwischen den jeweiligen Anschlussstutzen dann nur noch ein kurzer Verteilerrohrlängenabschnitt, die zur Fixierung und Abdichtung von Anschlüssen zur Verfügung steht. Dies erschwert die Herstellung einer verlässlichen, dichten Verbindung von zwei Verteilerrohr-Teilstücken miteinander oder mit anderen Anschlusselementen, wie etwa Endkappen, Abzweigern, Temperatur- oder Drucksensoren.

Der für endseitige Anschlüsse zur Verfügung stehende Verteilerrohrlängenabschnitt könnte zwar vergrößert werden, indem das Verteilerrohr zwischen zwei Kollektorrohr-Anschlüssen außermittig abgeschnitten wird, so dass das verbleibende Verteilerrohrstück auf Kosten des abgeschnittenen Verteilerrohrstücks verlängert ist. Dies führt jedoch einerseits zu Materialverlust und andererseits zu unterschiedlichen Abständen zwischen den Kollektorrohren, was aus ästhetischen Gründen und im Hinblick auf eine hohe Effizienz nicht erwünscht ist.

Um dieses Problem zu lösen, wird in der DE 88 15 930 U1 für den Fall eines Solarkollektors aus Kunststoffrohren zur Herstellung einer Verlängerung eines Verteilerrohres ein Verbindungselement in Form einer Rohrmuffe vorgeschlagen, die die beiden Verteilerrohrenden umgreift und zu diesem Zweck im Anschlussbereich der Kollektorrohre eine ausreichend große Aussparung aufweist. Zur Verbindung der Verteilerrohr-Enden wird die Rohrmuffe auf die beiderseitigen Enden so weit aufgeschoben, so dass sie die jeweiligen Kollektorrohr-Anschlüsse U-förmig umgreift. Auf diese Weise wird eine genügend große Kontaktfläche zwischen der Innenwandung der Rohrmuffe und der Außenwandung der Verteilerrohre erhalten, so dass die Rohrmuffe mit den Verteilerrohr-Enden flüssigkeitsdicht verschweißt oder verklebt werden kann.

Diese Verbindungsmethode hat sich beim Einsatz biegesteifer Verteilerrohre aus Kunststoff mit glatter Außenwandung bewährt. Bei Verteilerrohren, die eine gewisse radiale oder axiale Flexibilität aufweisen, unterliegen Klebe- oder Schweißverbindungen jedoch einer Ermüdung, die mit der Zeit zu Leckagen und zum Bruch führen kann.

Dieses Problem vermeidet der aus der 10 2007 036 749 A1 bekannte Solarkollektor zum Erwärmen von Schwimmbadwasser, indem die Verteilerrohre mit einem Wellprofil versehen sind. Dadurch haben die Verteilerrohre eine gewisse Flexibilität, was sich auf die Frostbeständigkeit und andere Eigenschaften des Absorbers vorteilhaft auswirkt.

Zur Formstabilisierung sind bei diesem Absorber über die Länge der Absorbermatte biegesteife Arretier- oder Stabilisierungsprofile verteilt, die sich über die gesamte Breite der Absorbermatte erstrecken und die parallel zu den Verteilerrohren verlaufen. Diese weisen nach oben offene, halbkreisförmige Ausnehmungen auf, in denen die Kollektorrohre mittels lösbarer Clipsverbindungen gehalten werden.

Derartige Stabilisierungsprofile zur seitlichen Fixierung von Kollektorrohre eines Solarkollektors sind auch aus der EP 1 413 836 A2 bekannt. Die biegesteifen Stabilisierungsprofile mindern die Einwirkung von Scherkräften auf die Kollektorrohre und verleihen so der Absorbermatte insgesamt eine gewisse Steifigkeit.

Infolge ihrer Biegesteifigkeit sind die Stabilisierungsprofile jedoch nicht aufwickelbar und schwierig transportierbar. Die Stabilisierungsprofile werden daher in der Regel vor Ort aus relativ kurzen Stabilisierungsprofil-Teilstücken mit Längen von weniger als 1 m mittels mechanischer Verbindungselemente wie Schrauben, Nieten und Klemmen zusammengefügt. Diese Montagearbeiten erfordern insbesondere bei großflächigen Absorbermatten einen hohen Aufwand.

Andererseits kann die durch biegesteife Stabilisierungsprofile bewirkte Steifigkeit der Absorbermatte für manche Anwendungen unerwünscht sein. Als Beispiele sind etwa Solarkollektoren zur Auflage auf gekrümmten oder gewellten Flächen, wie Mauern oder unebenen Bodenflächen zu nennen, oder Erdwärmeabsorber für die Verlegung in den Erdboden, bei denen entweder eine exakte und stabile und damit aufwändige Unterfütterung oder eine gewisse Formanpassungsfähigkeit an die jeweilige Auflagefläche zur Verminderung von Biegekräften beim Aufbringen des Erdreichs und Druckbelastungen durch einwirkendes Gewicht erwünscht ist.

### Technische Aufgabe

Der vorliegenden Erfindung liegt die Aufgabe zugrunde, einen Absorber bereit zu stellen, der sich durch einfache und sichere Montierbarkeit, Frostbeständigkeit, Ermüdungsfestigkeit und hohe Effizienz auszeichnet und der außerdem die Anforderungen an eine ästhetische Anmutung erfüllt.

Diese Aufgabe wird ausgehend von einem Absorber der eingangs genannten Gattung erfindungsgemäß dadurch gelöst, dass mindestens ein Teil der Rohranschlüsse einen mit der Wandung des Verteilerrohres verbundenen Sockel aufweist, der in zwei oder mehr Rohranschlussstutzen zum Anschluss der Kollektorrohre verzweigt.

Beim erfindungsgemäßen Absorber sind somit an einem Rohranschluss mindestens zwei Kollektorrohre angeschlossen. Hierzu ist ein Sockel vorgesehen, der mit der Kollektorrohr-Wandung flüssigkeitsdicht verbunden ist, und an dem unmittelbar oder mittelbar über ein Zwischenstück zwei oder mehr Rohranschlussstutzen ausgebildet sind.

Einer, mehrere oder sämtliche Rohranschlüsse sind mit derartigen, sich verzweigenden Sockeln ausgestattet. Die folgenden Erläuterungen gelten mehr oder weniger ausgeprägt für alle diese Ausführungsformen, auch wenn sie sich der Einfachheit halber nur auf die Ausführungsform beziehen, bei der sämtliche Rohranschlüsse mit sich verzweigenden Sockeln ausgestattet sind.

Rohranschlüsse mit sich verzweigendem Sockel haben mehrere Vorteile gegenüber den herkömmlichen Absorbern, bei denen ein Rohranschluss für jeweils nur ein Kollektorrohr vorgesehen ist:
1. Bei gleicher Anzahl von Kollektorrohren und gleichem seitlichen Abstand ist nur die Hälfte (oder weniger) an Anschlüssen in der Wandung des Verteilerrohres erforderlich. Im Bereich der Rohranschlüsse treten Spannungen in der Verteilerrohr-Wandung auf. Bei geringerer Anzahl an Rohranschlüsse ergibt sich somit eine höhere mechanische Stabilität des Absorbers und damit ein größerer Widerstand gegen auf die Wandung einwirkende Kräfte oder Drücke. Infolge der höheren Stabilität und Festigkeit des Verteilerrohres kann dessen Wandstärke vermindert werden. Eine geringere Wandstärke führt zu einer vergleichsweise höheren Flexibilität des Verteilerrohres, was den Transport erleichtert und die Frostbeständigkeit verbessert.
2. Dazu trägt auch die geringere Anzahl von Rohranschlüssen bei. Denn die seitlich vom Verteilerrohr abgehenden Rohranschlüsse bewirken eine hohe Steifigkeit des Verteilerrohres. Durch die Verringerung der Rohranschlüsse ergibt sich eine höhere Elastizität der Absorbermatte. Dies erleichtert den Transport und vermindert die Gefahr von Beschädigungen beim Transport. Insbesondere größere Absorbermatten, die auf dem oder im Boden verlegt werden, können wegen ihrer Flexibilität dem Bodenverlauf leichter folgen, so dass der Aufwand für einen Bodenausgleich entfällt.
3. Bei Fügeverbindungen zwischen Rohranschlüssen und Verteilerrohr-Wandung ergibt sich durch eine reduzierte Anzahl von Rohranschlüssen auch eine geringere Anzahl von Bohrungen und Dichtungen in der Wandung des Verteilerrohres, so dass die Anzahl möglicher Undichtigkeiten vermindert ist.
4. Zwischen benachbarten Rohranschlüssen steht eine größere anschlussfreie Rohrlänge zur Verfügung. Diese kann beispielsweise genutzt werden, um die Querschnitte der Rohranschlüsse zu optimieren oder deren Wandstärken im unmittelbaren Anschlussbereich zum Verteilerrohr zu vergrößern.
5. Die größere anschlussfreie Verteilerrohrlänge zwischen Rohranschlüssen erleichtert die Verbindung mit anderen Bauteilen auch bei mittiger Ablängung zwischen benachbarten Verteilerrohren. Dies ist insbesondere bei Flanschanschlüssen vorteilhaft. Zudem ist auch Platz für ein Gewinde vorhanden. Die erfindungsgemäße Absorbermatte ist für Längs- und Querverlegung geeignet, wobei ausreichend Platz für Verschraubungen und Fixierungen des Absorbers vorhanden sind.
6. Anstelle oder ergänzend zu einer Verringerung der Anzahl von Rohranschlüssen pro Längeneinheit des Verteilerrohres kann auch der seitliche Abstand zwischen den Kollektorrohren verringert werden, um die Effektivität der Wärmeübertragung (bezogen auf die Absorberfläche) zu verbessern.

Rohranschlüsse mit Verzweigern sind an den Enden des Verteilerrohres und in Verbindungsbereichen mit anderen Bauteilen besonders vorteilhaft, da sie die Verteilerrohrlänge vergrößern, die zur Verbindung oder Verlängerung zur Verfügung steht, wie oben bereits erläutert.

Das Verteilerrohr kann aus Metall oder Kunststoff bestehen.

Der Sockel der Rohranschlüsse kann mit dem Verteilerrohr lösbar oder unlösbar verbunden sein, etwa durch eine flüssigkeitsdichte Steckverbindung, durch Verschraubung, durch Verlöten oder Verschweißen. Vorzugsweise ist der Sockel jedoch integraler Bestandteil des Verteilerrohres.

Verteilerrohr und Sockel bilden hierbei einen integralen Verbund, sie sind also aus einem Stück gefertigt und werden vorteilhafterweise im gleichen Arbeitsgang geformt. Als Beispiele hierfür seien ein kontinuierliches Extrusionsblasverfahren oder ein diskontinuierliches Blasformverfahren genannt. Der integrale Verbund hat den Vorteil, dass der Aufwand für die nachträgliche Ausbildung einer formschlüssigen und dichten Verbindung zwischen Verteilerrohr und Sockel (etwa durch Verschweißen von Kunststoffteilen) entfällt ebenso wie die in der Regel damit einhergehende thermische Belastung des Verteilerrohres. Eine Störung der bei der Herstellung des Verteilerrohres vorgegebenen Kraftlinienverläufe (mit eher geringen mechanischen Spannungen) durch ein nachträgliches Anbringen der Rohranschluss-Sockel wird vermieden, und damit auch die Ausbildung von Spannungsspitzen. Der integral angeformte Sockel trägt daher auch bei andauernden Verformungskräften zu einer geringeren Rissanfälligkeit des Absorbers bei.

Bei einer besonders bevorzugten Ausführungsform des erfindungsgemäßen Absorbers verzweigt der Sockel in einen ersten Rohranschlussstutzen und in einen zweiten Rohranschlussstutzen.

Je mehr Kollektorrohre an einem Sockel montiert sind, umso größer sind die auf den Sockel einwirkenden Kräfte und die Anforderungen an dessen mechanische Stabilität. Bei zwei Kollektorrohren pro Sockel sind die oben genannten Vorteile bei verhältnismäßig geringer Sockel-Wandstärke erzielbar.

Die beiden Rohranschlussstutzen können beispielsweise an einem Y-förmigen oder T-förmigen Sockel angeschlossen sein. Besonders bevorzugt ist der Sockel jedoch L-förmig ausgebildet, mit einem mit der Verteilerrohr-Wandung verbundenen, ersten Schenkel, und mit einem parallel zur Verteilerrohr-Wandung verlaufenden zweiten Schenkel, mit dem der erste und der zweite Rohranschlussstutzen verbunden sind.

Die Mindestlänge des zweiten Schenkels ergibt sich durch den Abstand der daran angesetzten Kollektorrohre. Der mit dem Verteilerrohr verbundene erste Schenkel ist dabei aus Stabilitätsgründen vorzugsweise kürzer als der zweite Schenkel.

Diese Ausführungsform zeichnet sich durch eine besonders gute Frostbeständigkeit aus, wenn der erste Rohranschlussstutzen eine senkrecht zur Verteilerrohr-Wandung verlaufende erste Rohranschlussstutzen-Längsachse aufweist, die im Wesentlichen koaxial zur Längsachse des ersten Sockel-Schenkels verläuft.

Dabei ergibt sich eine im Wesentlichen gerade durchgehende Verbindung von der Verteilerrohr-Wandung zum ersten Rohranschlussstutzen. Durch diese Art der Verrohrung können der Abfluss von Flüssigkeit aus dem Absorber erleichtert und Flüssigkeitssenken vermieden werden.

Vorteilhafterweise weisen der erste Sockel-Schenkel und/oder der zweite Sockel-Schenkel einen nicht runden Innenquerschnitt auf.

Ein nicht-runder Innenquerschnitt der Sockel-Schenkel erlaubt eine stärkere Formänderung bei Innendruck als ein runder Innenquerschnitt. Dadurch ergibt sich eine bessere Frostbeständigkeit.

Im Fall von lösbaren Sockeln weist der mit der Verteilerrohr-Wandung verbundene Sockelbereich aus Gründen einer einfacheren Abdichtung in der Regel einen runden Querschnitt auf. Bei nicht lösbaren Sockeln oder einstückiger Ausführung kann dieser Sockelbereich auch jede andere Querschnittsform haben.

Bei einer bevorzugten Ausführungsform des erfindungsgemäßen Absorbers ist daher vorgesehen, dass der erste Sockel-Schenkel einen nicht runden Querschnitt mit einer längeren Abmessung (L_{L}) in Richtung der Verteilerrohr-Längsachse und senkrecht dazu eine kürzere Abmessung (L_{K}) aufweist.

Diese nicht-runden Querschnittsprofile haben den Vorteil, dass Innendrücke durch Formänderungen leichter kompensierbar sind. Die gegenüber herkömmlichen Absorbern verminderte Verteilungsdichte der Rohranschlüsse ermöglicht eine Verbreiterung des Sockels im Bereich der Anschlussstelle zum Verteilerrohr. Durch die Verbreiterung wird die mechanische Stabilität erhöht.

Der Sockel-Querschnitt - in Strömungsrichtung gesehen - ist beispielsweise abgerundet rechteckig bis oval ausgebildet.

Bei einer ersten bevorzugten Ausführungsform ist das Verteilerrohr mit einem Wellprofil versehen.

Das Verteilerrohr weist demnach über mindestens einen Längenabschnitt ein Wellprofil mit einem wellenförmig wechselnden Außendurchmesser auf. Das Verteilerrohr mit Wellrohr-Profil zeichnet sich durch eine gewisse Flexibilität einerseits und durch eine hohe Gestaltsteifigkeit gegenüber Außendruck bei relativ geringer Wandstärke andererseits aus. Es kann in Teilstücken vorgegebener Länge bereitstehen oder auch in Rollenform aufgewickelt sein, was die Lagerhaltung vereinfacht und den Transport zum Einsatzort erleichtert.

Der Einsatz von Verteilerrohren mit Wellrohrprofil wirkt sich auf die Frostbeständigkeit des Absorbers vorteilhaft aus. Dies kann darauf zurückgeführt werden, dass das Verteilerrohr infolge seines Wellrohrprofilierung elastisch und biegsam ist und dadurch der Ausdehnung des Eises (im Fall von Wasser als zu erwärmendem Fluid) folgen kann.

Das Verteilerrohr kann ohne wesentliche Einbußen an Flexibilität und Frostbeständigkeit über seine Länge abwechselnd Längenabschnitte mit Wellprofil und mit Glattprofil aufweisen. Glattprofilbereiche sind relativ einfach abzudichten und können beispielsweise zwischen Rohranschlussstutzen zwecks Ablängung an diesen Stellen vorgesehen sein.

Bei einer alternativen und gleichermaßen bevorzugten Ausführungsform des erfindungsgemäßen Absorbers ist das Verteilerrohr mit einer glatten Wandung versehen, wobei es vorgefertigte Bohrungen zur Aufnahme der Rohranschlüsse aufweist

Verteilerrohre mit glatter Wandung, sogenannte Glattrohre, sind einfacher und kostengünstiger herstellbar als Wellrohre. Sie haben eine höhere Biegesteifigkeit und sind relativ einfach abzudichten. Glattrohre werden insbesondere bei großen Verteilerrohr-Durchmessern bevorzugt sowie bei Anwendungen, bei denen Flexibilität und Frostbeständigkeit des Absorbers keine wichtige Rolle spielen. Die vorgefertigten Bohrungen dienen zur Aufnahme der Rohranschlüsse mittels Gewinde- oder Steckverbindungen.

Es hat sich bewährt, wenn die Sockel entlang einer gemeinsamen Längsseite der Verteilerrohr-Wandung angeordnet sind, und auf der der gemeinsamen Längsseite gegenüberliegenden Längsseite eine Vielzahl von Prägeelementen zur Formstabilisierung vorgesehen ist.

Bei den Prägeelementen handelt es sich um eine maschinell hergestellte Ausformungen im Bereich der Verteilerrohr-Wandung, die jeweils einem Rohranschluss ungefähr - im Idealfall genau - gegenüberliegen. Vorzugsweise sind die Prägeelemente als ringförmige oder längliche Vertiefung oder Erhebung mit etwa den Abmessungen im Fußbereich des Sockels ausgeformt. Die Prägeelemente bewirken einen Ausgleich mechanischer Spannungen, die infolge der nur einseitig in der Verteilerrohr-Wandung integrierten Rohranschlüsse erzeugt würden, und sie tragen so zu einer besseren Formbeständigkeit und Dichtigkeit des Absorbers bei. Darüber hinaus erhöhen sie die Steifigkeit des Verteilerrohres. Im Idealfall ist jedem Sockel jeweils ein Prägeelement an der gegenüberliegenden Seite der Verteilerrohr-Wandung gegenüberliegt.

Es hat sich bewährt, wenn parallel zu dem Verteilerrohr verlaufende Stabilisierungsprofile eingesetzt werden, die über ihre Länge im Abstand der Kollektorrohre offene Aufnahmen für eine Clipsverbindung mit den Kollektorrohren aufweisen.

Die Stabilisierungsprofile verlaufen quer zu den Kollektorrohren und nehmen Scherkräfte von den Kollektorrohren weg. Dies ist insbesondere dann sinnvoll, wenn das Verteilerrohr oder die Verteilerrohre des erfindungsgemäßen Absorbers als Wellrohr ausgebildet sind und demzufolge eine gewisse Flexibilität haben. Die Stabilisierungsprofile tragen auch zur Formstabilisierung der mattenförmigen Anordnung bei. Für Anwendungen, bei denen eine hohe Formstabilität gewünscht ist, wird eine größere Anzahl an derartigen Stabilisierungsprofilen und/oder steifere Stabilisierungsprofile eingesetzt. Die Halteprofile zeigen üblicherweise nach oben offene, halbkreisförmige Ausnehmungen zur Aufnahme der Kollektorrohre. Der Durchmesser der Ausnehmungen ist an den Durchmesser der Kollektorrohre angepasst und in der Regel etwa halbkreisförmig ausgebildet.

Bevorzugt ist das Stabilisierungsprofil aus mehreren Stabilisierungsprofil-Teilstücken zusammengesetzt, wobei mindestens zwei Stabilisierungsprofil-Teilstücke über eine Strecke derart überlappen, dass jeweils mindestens eine Ausnehmung und ein Stegbereich zwischen zwei Ausnehmungen fluchten, wobei die Stegbereiche mit einer planen Anlagefläche aneinander liegen und mittels einer gemeinsamen Klammer übergriffen werden.

Gemäß der Erfindung werden die Stabilisierungsprofile aus stoßweise aneinandergrenzenden Teilstücken zusammengesetzt und die Teilstücke mittels einer Klammer miteinander verbunden. Die Klammer wird auf die Abschlussstege kappenartig aufgestülpt und arretiert, wobei sie mit einer sich konisch nach außen erweiternden Hohlraum ausgebildet sein kann, der ein Aufschieben auf die Abschlussstege erleichtert. Weiterhin kann sie ein Widerlager aufweisen, das eine Einrastung mit den Abschlussstegen gewährleistet. Diese Verbindungsmethode ermöglicht eine vergleichsweise einfache Montage der Stabilisierungsprofil-Teilstücke, so dass sie kürzer ausgeführt sein können und damit einfacher zu transportieren sind.

Dabei wird vorzugsweise eine Klammer eingesetzt, die einen Hohlraum mit darin fixierter Platte aufweist, wobei sich die Platte beim Aufsetzen der Klammer in einen Schlitz einfügt, der die aneinanderliegenden Stegbereiche quert.

Die Platte wird beim Aufsetzen der Klammer in den Schlitz gepresst, der die beiden aneinanderliegenden Stegbereiche quert. Die biegesteife Platte ist mit der Klammer verbunden und verhindert eine gegenseitige Verschiebung der Stegbereiche in Richtung der Profil-Längsachse. Dadurch werden Scherkräfte auf die Kollektorrohre, die in dem Stabilisierungsprofil fixiert sind, weitgehend verhindert. Die Klammer verhindert ein Ausweichen der Platte aus dem Schlitz und ein Auseinanderdriften der Stegbereiche in Richtung quer zur Profil-Längsachse.

Vorzugsweise umfasst die Klammer einen Fuß, der sich in Richtung beider Halteprofil-Teilstücke erstreckt, und auf dem jeweils ein Kollektorrohr aufliegt.

Die auf dem beidseitigen Fuß der Klammern aufliegenden und in den Aufnahmen der Stabilisierungsprofile fixierten Kollektorrohre verhindern ein Ausweichen der Klammern nach oben.

Bei einer besonders bevorzugten Ausführungsform des erfindungsgemäßen Absorbers ist vorgesehen, dass die Stabilisierungsprofil-Aufnahmen für die Kollektorrohre über Stege miteinander verbunden sind, die in einer Mittelachse des Stabilisierungsprofils verlaufen.

Beim Biegen oder Verdrillen des Stabilisierungsprofils ist die Geometriebedingung zu beachten, wonach eine gebogene oder verdrillte bandförmige Struktur - vergleichbar einer Schraubenlinie - an den Rändern eine größere Länge beziehungsweise eine kleinere Länge aufweist als im Zentrum. Ein im Wesentlichen bandförmiges Stabilisierungsprofil aus einem Werkstoff, der praktisch keine plastische Verformung zulässt, kann wegen dieser Geometriebedingung praktisch nicht oder zumindest nicht ohne hohe elastischer Spannungen im Bereich der Profilränder verdrillt oder gebogen werden. Nur die Mittellachse des Profils erfährt beim Biegen keine Längung oder Stauchung.

Bei der bevorzugten Ausführungsform verlaufen die Stege, über die die Stabilisierungsprofil-Aufnahmen miteinander verbunden sind genau oder annähernd in dieser Mittelachse des Stabilisierungsprofils. Dadurch erfahren sie bei einer Verdrillung oder Biegung des Profils keine (oder nur eine geringe) Stauchung oder Längung, so dass die Stege diesen Verformungen wenig Widerstand entgegensetzen. Dadurch ergibt sich eine höhere Flexibilität des Stabilisierungsprofils.

Diese Ausführungsform des erfindungsgemäßen Absorbers, die trotz erzwungener Ausrichtung und Fixierung der Kollektorrohre durch Stabilisierungsprofile eine hohe Beweglichkeit und Biegsamkeit der Absorbermatte in Richtung de Mattennormalen möglicht, ist für die Verlegung auf unebenen Flächen, insbesondere auch für eine Verlegung im Erdreich, besonders gut geeignet. Die flächige Anordnung der Kollektorrohre kann sich Unebenheiten der Unterlage leicht anpassen.

In dem Zusammenhang hat es sich auch bewährt, wenn die Aufnahmen für die Kollektorrohre wechselweise nach oben und unten offen sind.

Dabei können die Stabilisierungsprofile einer Absorbermatte beispielsweise so angeordnet sein, dass ein und dasselbe Kollektorrohr stets in nach oben offenen Aufnahmen eingeklipst wird und die benachbarten Kollektorrohre stets in nach unten offenen Aufnahmen. Bevorzugt wird jedoch ein und dasselbe Kollektorrohr wechselweise in einer nach oben offenen Aufnahme und in einer nach unten offenen Aufnahme eingeklipst, so dass sich eine Webstruktur zwischen den Stabilisierungsprofilen und den Kollektorrohren ergibt, die zu einer besonders guten Fixierung der Kollektorrohre und zu einer hohen Stabilität der flächigen Anordnung der Absorbermatte beiträgt.

Vorzugsweise bestehen die Verteilerrohre und die Kollektorrohre aus dem gleichen Kunststoff. Fügeverbindungen der Bauteile miteinander zeigen wegen des jeweils gleichen thermischen Ausdehnungskoeffizienten geringe Dichtungs- und Alterungsprobleme, was sich auch im Hinblick auf eine gute Frostbeständigkeit bemerkbar macht.

### Ausführungsbeispiel

Nachfolgend wird die Erfindung anhand von Ausführungsbeispielen und einer Zeichnung näher erläutert. Dabei zeigt in schematischer Darstellung im Einzelnen:
- **Figur 1**: eine erste Ausführungsform eines Verteilerrohres mit Rohranschlüs- sen für einen erfindungsgemäßen Absorbers in einer Seitenansicht,
- **Figur 2**: einen Schnitt durch den Sockel des Rohranschlusses gemäß Figur 1 entlang der Linie A-A,
- **Figur 3**: einen Schnitt durch den Sockel des Rohranschlusses gemäß Figur 1 entlang der Linie B-B,
- **Figuren 4a, 4b, 4c**: alternative Ausführungsformen für Verzweigungen der Rohranschlüsse gemäß der Erfindung,
- **Figur 5**: eine zweite Ausführungsform eines Verteilerrohres für einen erfin- dungsgemäßen Absorber mit einsteckbaren Rohranschlüssen in ei- ner Seitenansicht im Schnitt,
- **Figur 6**: eine Draufsicht auf eine Absorbermatte mit schematischer Darstel- lung der Flüssigkeitsströmung in den Verteilerrohren und in den Kol- lektorrohren,
- **Figur 7**: einen Ausschnitt einer weiteren Ausführungsformen einer Absorber- matte mit schematischer Darstellung der Flüssigkeitsströmung in ei- ner Draufsicht,
- **Figur 8**: eine erste Ausführungsform eines Stabilisierungsprofils für eine Ab- sorbermatter mit Aufnahmen zur Aufnahme von Kollektorrohren in einer Seitenansicht,
- **Figur 9**: eine zweite Ausführungsform eines Stabilisierungsprofils mit mitein- ander verbundenen Stabilisierungsprofil-Teilstücken in einer Seiten- ansicht und
- **Figur 10**: eine Draufsicht auf eine Klammer zur Verbindung der Stabilisie- rungsprofil-Teilstücke gemäß Figur 9.

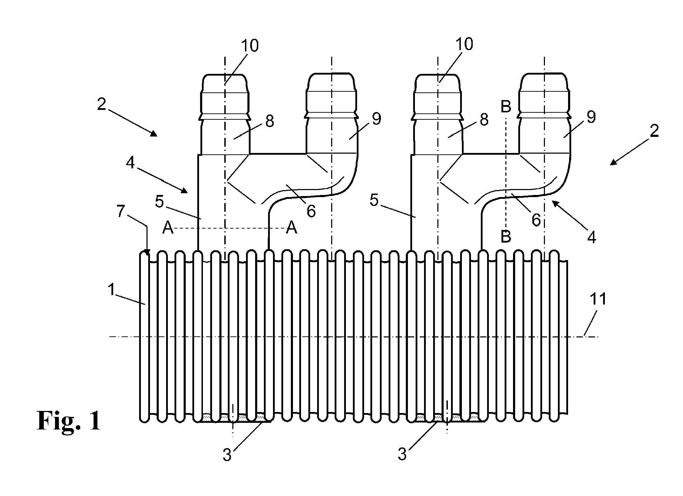

**Figur 1** zeigt schematisch ein Verteilerrohr 1 für einen Absorber zum Erwärmen des Wassers eines Swimmingpools. Das Verteilerrohr 1 ist als Wellrohr ausgebildet und wird mittels eines Extrusionsblasverfahrens aus Polypropylen gefertigt. Auf einer Seite der Verteilerrohr-Wandung 7 sind in einem regelmäβigen Abstand von 70 mm entlang der Verteilerrohr-Längsachse 11 Rohranschlüsse 2 und jedem Rohranschluss 2 gegenüberliegend eine so genannte Sicke 3 als integrale Bestandteile der Verteilerrohres 1 ausgeformt.

Der Rohranschluss 2 besteht aus einem Sockel 4 mit einem im Querschnitt L-förmigen Profil, wobei der kürzere Schenkel 5 des Profils mit der Wandung 7 des Verteilerrohres 1 verbunden ist und der längere Schenkel 6 des L-Profils zwei Rohranschlussstutzen 8, 9 für die Verbindung mit einem Kollektorrohr (in der Figur 1 nicht dargestellt) trägt.

Die Mittelachsen 10 von Rohranschlussstutzen 8 und kurzem Sockel-Schenkel 5 verlaufen koaxial.

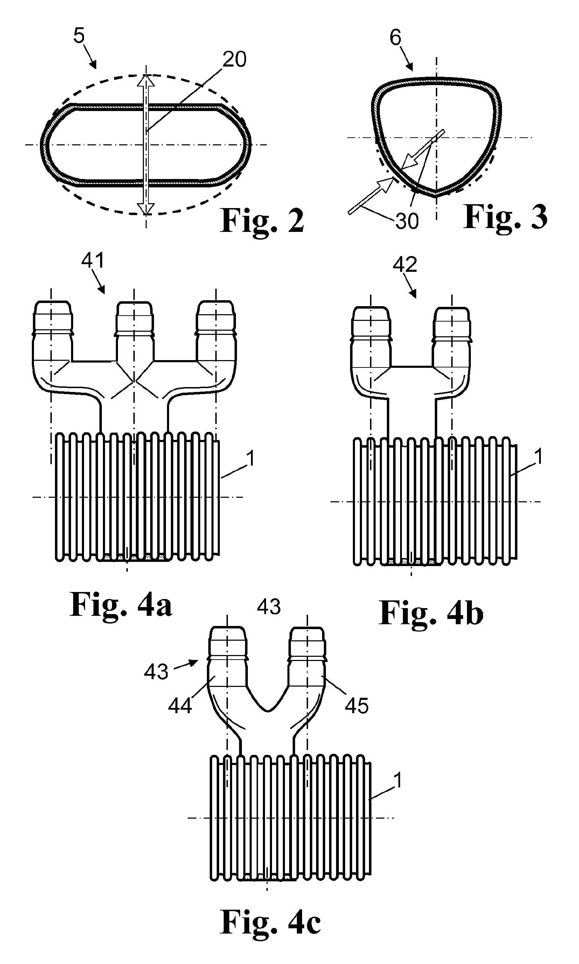

Der Querschnitt des kurzen Sockel-Schenkels 5 ist im Wesentlichen rechteckig mit abgerundeten Kanten ausgebildet, wie aus der Draufsicht von Figur 2 ersichtlich. Die längere Seite misst 2,5 cm und die kurze Seite 2 cm. Die Rechteckform und die vergleichsweise großen Sockelabmessungen gewährleisten eine hohe mechanische Stabilität des Rohranschlusses 1 und ermöglichen eine Formänderung bei Anliegen eines Innendrucks, wie dies durch die gestrichelten Linien und den Blockpfeil 20 angedeutet ist.

Der Querschnitt des längeren Sockelschenkels 6 zeigt Dreiecksform mit abgerundeten Ecken, wie aus **Figur 3** ersichtlich. Auch hierdurch ergibt sich eine bessere Formänderungsvermögen bei Innendruck und damit eine höhere Frostbeständigkeit. Das Formänderungsvermögen ist durch gestrichelten Linien und Blockpfeil 30 angedeutet.

In Figur 4 sind alternative Ausführungsformen der erfindungsgemäßen Rohranschlüsse schematisch dargestellt. **Figur 4a** zeigt einen Rohranschluss mit Dreifach-Verzweigung des Sockels 41, **Figur 4b** zeigt einen zweifach verzweigten Sockel 42 mit T-Profil und **Figur 4c** zeigt einen zweifach verzweigten Sockel 43 mit Y-Profil, der in die beiden Rohranschlüsse 44, 45 verzweigt.

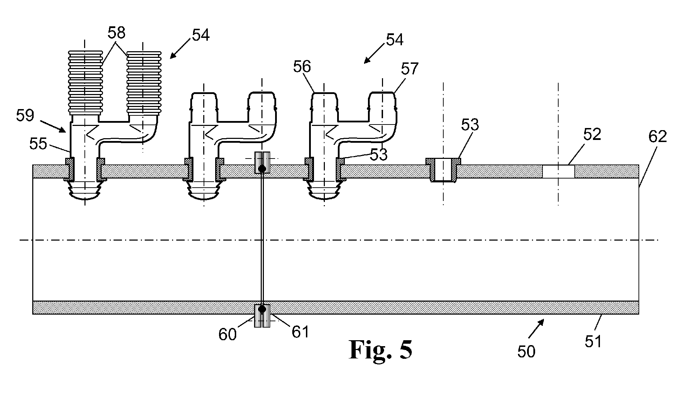

Bei der in Figuren 1 bis 4 dargestellten Ausführungsform des erfindungsgemäßen Absorbers sind die Rohranschlüsse integral mit der Wandung des Verteilerrohres 1 verbunden. **Figur 5** zeigt eine dazu alternative Ausführungsform unter Einsatz eines dickwandigen Verteilerrohres 50 mit glatter Wandung 51 und einem Außendurchmesser von 150 mm. In der Wandung 51 sind in regelmäßigen Abständen Bohrungen 52 entlang der Verteilerrohr-Längsachse vorgesehen, in die jeweils eine Anschlusshülse 53 eingesetzt ist. Durch die Anschlusshülsen 53 ragt ein Rohranschluss 54 in die Bohrung des Verteilerrohres 50. Die Dichtung erfolgt dabei infolge der Profilierung des Rohranschlusses 54 durch Anpressen der Anschlusshülse 53 an die RohrInnenwandung Im Unterschied zum anhand Figur 1 erläuterten Rohranschluss-Sockel ist hier der durch die Anschlusshülse 53 ragende Profil-Schenkel 55 des Sockels 59 mit rundem Querschnitt ausgebildet, was die Abdichtung erleichtert. Auf die Rohranschlussstutzen 56, 57 des Sockels 59 werden Kollektorrohre 58 aufgesteckt.

Das Verteilerrohr 51 ist aus zwei Teilstücken mit Endflanschen 60 stoßweiße zusammengesetzt. Die Verbindung der Teilstücke erfolgt durch Verschrauben der Flansche 60, zwischen denen ein O-Ring 61 eingesetzt ist. Diese Verbindung wird durch den größeren Abstand zwischen den Sockeln 59 erleichtert, der sich infolge der erfindungsgemäßen Rohranschlüsse 54 ergibt.

Der größere Abstand bietet außerdem eine größere Auflagefläche für Halterungen für den Absorber. Dadurch können breitere Haltemittel, wie etwa Schlauchschellen oder vorzugsweise Gummibänder, eingesetzt werden, so dass sich die Haltekräfte auf eine größere Fläche verteilen. Dadurch wirken geringere Flächenlasten an den Verteilerrohren und es wird wenig Abrieb erzeugt, was gerade bei den dünnwandigen Verteilerrohren besonders wünschenswert ist.

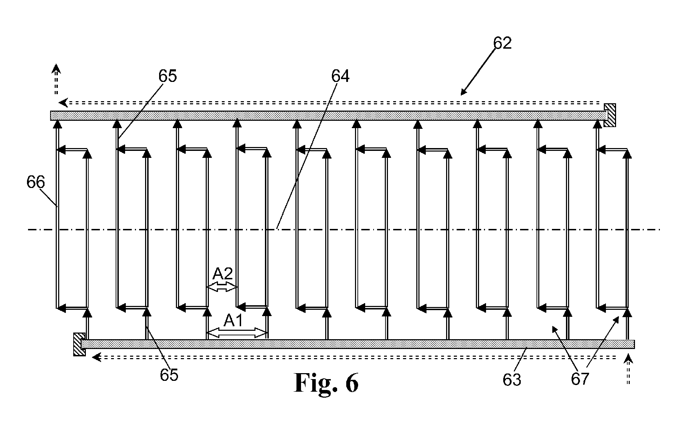

**Figur 6** zeigt schematisch Diagonal-Absorber für den Einsatz zum Erwärmen des Wassers für einen Swimmingpool nach dem so genannten Tichelmann-Prinzip. Die Absorbermatte 62 besteht im Wesentlichen aus zwei stirnseitig angeordneten Verteilerrohren 63, 64, die jeweils mit Rohranschlüssen 65 gemäß der Erfindung ausgestattet sind und über eine Vielzahl paralleler zueinander verlaufender Kollektorrohre 66 miteinander verbunden sind. Die Kollektorrohre 66 und die Verteilerrohre 63, 64 sowie die Rohranschlüsse 65 bestehen aus Polypropylen, das gegenüber UV-Strahlung stabilisiert und gegenüber chlorhaltigem Wasser resistent ist.

Das zu erwärmende Wasser gelangt über das Verteilerrohr 63, das sich über die gesamte Einlassseite der Absorber-Matte 62 erstreckt annähernd gleichmäßig in die Kollektorrohre 66, durchströmt diese unter Wärmeaufnahme in der durch die Richtungspfeile angezeigten Richtung und tritt auf der gegenüberliegenden Seite in die Verteiler-Ableitung 64 (Sammelrohr) ein, von wo es über den Auslass wieder aus der Absorbermatte 62 austritt und in einen (in der Figur nicht dargestellten) Swimmingpool gelangt.

Aus Figur 6 ist ersichtlich, dass der Mittenabstand A1 der Rohranschlüsse 65 doppelt so groß ist wie der Mittenabstand A2 der Kollektorrohre 66. Dies wird durch den Einsatz von Rohranschlüssen 65 mit Verzweigern ermöglicht, wie beispielsweise Verzweigern 67 mit L-förmigem Profil, wie in Figur 6 schematisch angedeutet.

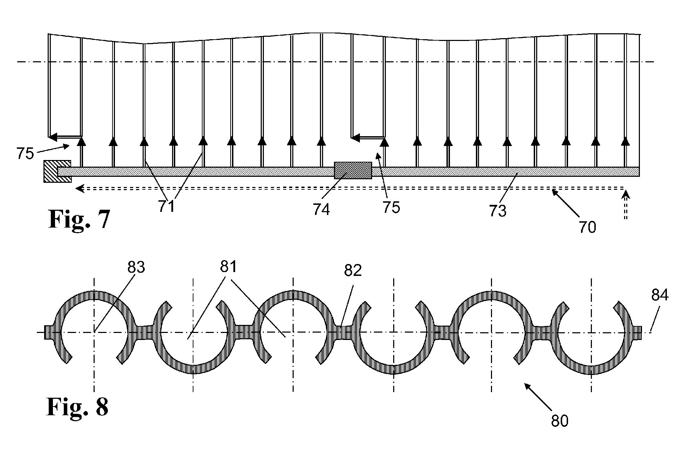

**Figur 7** zeigt schematisch eine alternative Ausführungsform einer erfindungsgemäßen Absorbermatte 70 in einem Ausschnitt mit zwei zusammengesetzten Verteilerrohren 73. Die Verteilerrohre 73 sind mittels einer Manschette 74 miteinander verbunden.

Jedes Verteilerrohr 73 weist nur an einem Ende einen sich verzweigenden Rohranschluss 75 auf. Ansonsten sind übliche Rohranschlussstutzen 71 ohne Verzweiger vorgesehen. Durch Einsatz von Rohranschlüssen 75 mit Verzweiger im Endbereich, wird der zur Verbindung mittels Manschette 74 zur Verfügung stehende Rohrlänge vergrößert.

Über die Länge der Absorbermatte sind Stabilisierungsprofile angeordnet, die zur seitlichen Fixierung der Kollektorrohre dienen und die Scherspannungen von diesen wegnehmen. **Figur 8** zeigt einen Querschnitt eines Stabilisierungsprofils 80, das eine Vielzahl von Aufnahmen 81 zur Aufnahme der Kollektorrohre aufweist. Die Aufnahmen sind wechselweise nach oben oder nach unten offen und mittels Stegen 82 miteinander verbunden. Die Stege 82 und die Mittelpunkte 83 der Aufnahmen 81 verlaufen dabei in der Mittelachse 84 des Stabilisierungsprofils 80. Dadurch ergibt sich eine höhere Biegsamkeit des Stabilisierungsprofils 80, so dass dieses insbesondere zur Auflage auf nicht ebenen Flächen und im Bodenbereich besonders geeignet ist. Die Kollektorrohre werden wechselweise von unten und von oben in die Aufnahmen 81 eingeklipst. Dadurch ergibt sich eine webartige Verbindung zwischen Stabilisierungsprofil 80 und Kollektorrohren, was zu einer erhöhten mechanischen Stabilität führt.

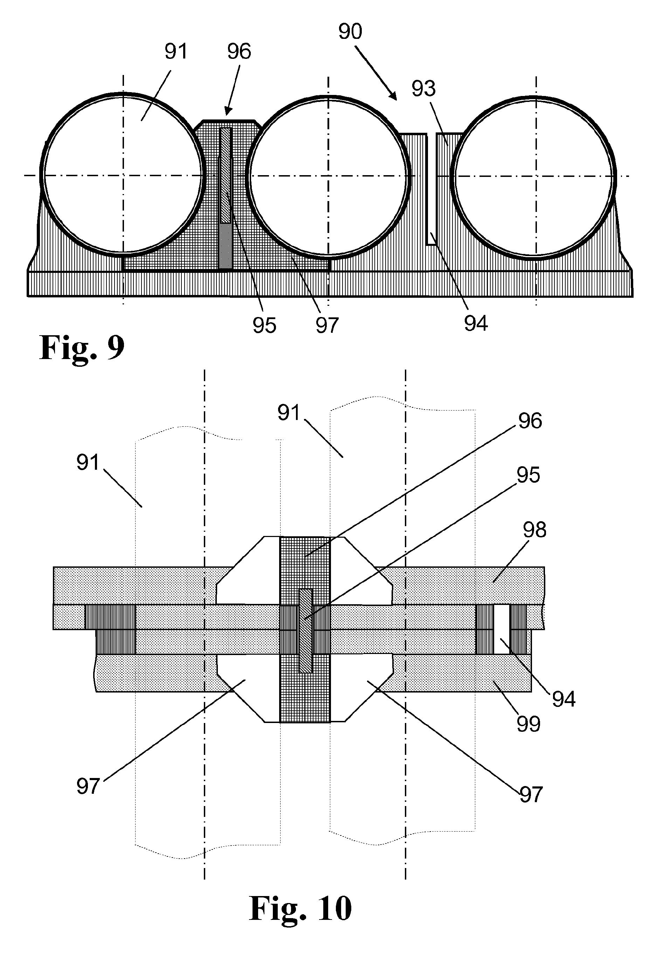

**Figur 9** zeigt eine alternative Ausführungsform eines Stabilisierungsprofils 90 zur Aufnahme von Kollektorrohren 91. Das Stabilisierungsprofil 90 hat eine L-Form und zeigt nach oben offene, im Wesentlichen halbkreisförmige Aufnahmen für die Kollektorrohre 91, die über Stege 93 miteinander verbunden sind. Die Stege 93 zwischen den Kollektorrohr-Aufnahmen zeigen jeweils einen Längsschlitz 94 (in einer alternativen Ausführungsform zeigen nur die Stege 93 an den Profilenden einen Längsschlitz).

Das Stabilisierungsprofil 90 ist aus bereichsweise überlappenden Teilstücken 98; 99 (siehe Figur 10) zusammengesetzt. Die Teilstücke 98, 99 liegen dabei mit einer Flachseite (Rückseite des langen L-Schenkels) so aneinander, dass die Aufnahmen für die Kollektorrohre 91 und die Schlitze 94 fluchten.

Vor dem Einklipsen der Kollektorrohre 91 wird in den gemeinsamen Schlitz 94 eine Metallplatte 95 eingesetzt, die die beiden überlappenden Teilstücke 98. 99 zueinander fixiert, indem sie ein Abgleiten in der Stabilisierungsprofil-Längsachse verhindert. Über die Stege 93 wird eine Klammer 96 gesetzt, die die beiden Stege 93 seitlich überfängt und so ein Auseinanderdriften in Richtung senkrecht zur Stabilisierungsprofil-Längsachse verhindert. Der Einfachheit halber ist die Metallplatte 95 in einen Hohlraum der Klammer 96 eingesetzt, so dass beim Aufsetzen der Klammer 96 gleichzeitig die Metallplatte 95 in den Schlitzt eingepresst wird. Die Klammer 96 ist mit einem Fuß 97 versehen, der sich beiderseits in Richtung der Kollektorrohre 91 erstreckt und auf dem die Kollektorrohre 91 aufliegen.

**Figur 10** zeigt schematisch die Klammer 96 einschließlich Metallplatte 95 und beidseitigem Fuß 97 in einer Draufsicht (im Schnitt).

## Patentansprüche

1. Absorber zum Erwärmen eines Fluids, umfassend mindestens ein Verteilerrohr (1, 50, 63, 64, 73) zur Zu- oder Ableitung des zu erwärmenden Fluids, das eine Längsachse (11; 62) und eine Verteilerrohr-Wandung (7, 51) aufweist, über deren Länge Rohranschlüsse (2, 41, 42, 43, 54, 71) zum Anschluss von Kollektorrohren (58, 66, 91) verteilt sind, **dadurch gekennzeichnet, dass** mindestens ein Teil der Rohranschlüsse (2, 41, 42, 43, 54, 71) einen mit der Wandung (7, 51) des Verteilerrohres (1, 50, 63, 64, 73) verbundenen Sockel (4, 55) aufweist, der in zwei oder mehr Rohranschlussstutzen (8, 9, 44, 45) zum Anschluss der Kollektorrohre (58, 66, 91) verzweigt.

2. Absorber nach Anspruch 1, **dadurch gekennzeichnet, dass** der Sockel (4, 55) integraler Bestandteil des Verteilerrohres (1, 50, 63, 64, 73) ist.

3. Absorber nach Anspruch 1 oder 2, **dadurch gekennzeichnet, dass** der Sockel (4, 55) in einen ersten Rohranschlussstutzen (8, 44) und in einen zweiten Rohranschlussstutzen (9, 45) verzweigt.

4. Absorber nach Anspruch 3, **dadurch gekennzeichnet, dass** der Sockel (4, 55) L-förmig mit einem mit der Verteilerrohr-Wandung verbundenen, ersten Schenkel (5,) und mit einem parallel zur Verteilerrohr-Wandung verlaufenden zweiten Schenkel (6) ausgebildet ist, mit dem der erste und der zweite Rohranschlussstutzen (8, 9) verbunden sind.

5. Absorber nach Anspruch 4, **dadurch gekennzeichnet, dass** der erste Rohranschlussstutzen (8) eine senkrecht zur Verteilerrohr-Wandung (7) verlaufende erste Rohranschlussstutzen-Längsachse aufweist, die im Wesentlichen koaxial zur Längsachse (10) des ersten Sockel-Schenkels verläuft.

6. Absorber nach Anspruch 4 oder 5, **dadurch gekennzeichnet, dass** der erste Sockel-Schenkel (5) und/oder der zweite Sockel-Schenkel (6) einen nicht runden Innenquerschnitt aufweisen.

7. Absorber nach Anspruch 6, **dadurch gekennzeichnet, dass** der erste Sockel-Schenkel (5) einen nicht runden Querschnitt mit einer längeren Abmessung (L_{L}) in Richtung der Verteilerrohr-Längsachse (11) und senkrecht dazu eine kürzere Abmessung (L_{K}) aufweist.

8. Absorber nach Anspruch 7, **dadurch gekennzeichnet, dass** der Querschnitt abgerundet rechteckig bis oval ausgebildet ist.

9. Absorber nach einem der vorhergehenden Ansprüche, **dadurch gekennzeichnet, dass** das Verteilerrohr (1) mit einem Wellprofil versehen ist.

10. Absorber nach einem der Ansprüche 1 bis 8, **dadurch gekennzeichnet, dass** das Verteilerrohr (50, 63, 64, 73) mit einer glatten Wandung versehen ist, und vorgefertigte Bohrungen (52) zur Aufnahme der Rohranschlüsse (54, 71) aufweist.

11. Absorber nach einem der vorhergehenden Ansprüche, **dadurch gekennzeichnet, dass** die Sockel (4, 55) entlang einer gemeinsamen Längsseite der Verteilerrohr-Wandung angeordnet sind, und dass auf der der gemeinsamen Längsseite gegenüberliegenden Längsseite eine Vielzahl von Prägeelementen zur Formstabilisierung vorgesehen sind.

12. Absorber nach einem der vorhergehenden Ansprüche, **dadurch gekennzeichnet, dass** parallel zu dem Verteilerrohr (1, 50, 63, 64, 73) angeordnete Stabilisierungsprofile (80, 90) eingesetzt werden, die über ihre Länge im Abstand der Kollektorrohre (58, 66, 91) offene Aufnahmen (81) für eine Clipsverbindung mit den Kollektorrohren (58, 66, 91) aufweisen.

13. Absorber nach Anspruch 12, **dadurch gekennzeichnet, dass** das Stabilisierungsprofil (90) aus mehreren Stabilisierungsprofil-Teilstücken (98, 99) zusammengesetzt, wobei mindestens zwei Stabilisierungsprofil-Teilstücke über eine Strecke derart überlappen, dass jeweils mindestens eine Ausnehmung und ein Stegbereich (93) zwischen zwei Ausnehmungen fluchten, wobei die Stegbereiche (93) mit einer planen Anlagefläche aneinanderliegen liegen und mittels einer gemeinsamen Klammer (96) übergriffen werden, die einen Hohlraum mit darin fixierter Platte (95) aufweist, wobei sich die Platte (95) beim Aufsetzen der Klammer (96) in einen Schlitz (94) einfügt, der die aneinanderliegen liegenden Stegbereiche (98, 99) quert.

14. Absorber nach Anspruch 13, **dadurch gekennzeichnet, dass** die Klammer (96) einen Fuß (97) umfasst, der sich in Richtung beider Stabilisierungsprofil-Teilstücke (98, 99) erstreckt, und auf dem jeweils ein Kollektorrohr (91) aufliegt.

15. Absorber nach Anspruch 12, **dadurch gekennzeichnet, dass** die Aufnahmen (81) für die Kollektorrohre über Stege (82) miteinander verbunden sind, die in einer Mittelachse (84) des Stabilisierungsprofils (80) verlaufen, und dass die Aufnahmen (81) wechselweise nach oben und unten offen sind.
